Europäisches Patentamt

European Patent Office

Office européen des brevets

(11) Publication number: **0 302 609**
**A2**

## EUROPEAN PATENT APPLICATION

(21) Application number: **88306439.6**

(22) Date of filing: **14.07.88**

(51) Int. Cl.⁴: **B23D 61/02 , B27B 33/08 , A01G 3/08**

(30) Priority: **07.08.87 US 83578**

(43) Date of publication of application:
**08.02.89 Bulletin 89/06**

(84) Designated Contracting States:
**BE CH DE FR GB IT LI SE**

(71) Applicant: **BLOUNT, INC.**
**5550 S.W. Macadam Avenue**
**Portland Oregon 97201(US)**

(72) Inventor: **Huntington, Kent L.**
**14560 South Bagby Road**
**Molalla Oregon 97038(US)**

(74) Representative: **Jones, Ian et al**
**POLLAK MERCER & TENCH High Holborn**
**House 52-54 High Holborn**
**London WC1V 6RY(GB)**

(54) **Brush cutting blade.**

(57) A brush cutting blade (10) has a curved slitter type/non-raker type primary cutting tooth (16), and a preceding appendage (18) forming a combination depth gauge and small stem slitter. The primary tooth (16) terminates over the blade body, with the cutting edge (22) provided by that curved portion of the tooth between its most lateral point (24) and the point (28) of termination over the blade body. The cutting edge (22) is curved but outwardly directed in a slitter configuration throughout its length. The lateral point of the cutting edge determines the kerf width to prevent binding. The slitter cutting edge (40) of the appendage (18) is hook shaped to cut small willowy-type stems and the appendage has an upper inclined guide edge (38) that guides larger rigid-type stems to the primary cutting tooth (16). The uppermost point (36) of this guide edge of the appendage provides a depth gauge for the primary cutting tooth.

FIG. I

## BRUSH CUTTING BLADE

This invention relates to a brush cutting blade comprising a circular saw blade.

The design of a cutting tool for brush cutting presents special problems. Brush, such as contemplated herein, is comprised of small weedy or willowy stems including grass and similar stems up to 1.27 cm. (1/2 inch) diameter, as well as more rigid stems including small trees up to 12.7 cm. (five inches) in diameter. Cutting tools designed specifically for larger rigid stems are designed to bite into and tear out wood chips, and rely on the rigidity of the material being cut. Such tooth types are not suitable for cutting the weedy or willowy brush materials. These materials simply bounce on the outer projections of the blade because they are devoid of the rigidity needed to allow the biting or digging-in action.

A number of tooth configurations have been tried without success, for example the slitter tooth illustrated in U.S. Patent 3,866,504, and the curved slitter of U.S. Patent 2,725,906. A circular saw blade with slitter teeth will pinch-bind when cutting larger stems due to the narrow kerf that is generated. A hooded cutter becomes too aggressive and jams.

The present invention provides a circular saw blade with cutting teeth which are essentially a variation of the heretofore known slitter tooth, the cutting tooth being curved laterally outwardly of the plane defined by the blade body and back over the blade body, terminating in a tooth tip substantially at a mid-point over the blade body. The direction of the blade edge curve at the tooth tip is still outwardly directed (radially of the blade body) as opposed to a conventional hooded cover where raker cutting action is generated by the top plate of the tooth. Such raker cutting is specifically avoided in accordance with the present invention. The cutting tooth provides slitter type cutting action, forming a kerf that is wider than the blade body to reduce binding and pinching.

The portion of the curved slitter tooth as it turns back towards the blade body and continuing substantially to the tooth tip, is the entire cutting edge and generates slitter cutting action only. Alternate teeth are projected from opposite sides of the blade body and the cutting tips of successive oppositely curved teeth may overlap a small amount. However, the overlapping portions or tooth tips are only to ensure that the centre of the kerf is fully cut and removed. The tooth tips are specifically limited so as not to project past the blade body, thereby ensuring that the curved intermediate portion of the tooth does the primary cutting, with such intermediate portion specifically designed to determine the kerf width.

The depth of cut of the curved slitter or other primary teeth can be controlled by depth gauge portion of the appendage. The depth gauge appendage can present an inclined outer edge that engages and cams larger materials to an appropriate depth of cut.

The present invention also provides a circular saw blade with primary cutting teeth, preferably curved slitter teeth shaped as described above, and a preceding appendage with a leading cutter edge, preferably hook-shaped, for severing small stem brush materials.

The appendage can have a short leading edge which may be sharpened into a radially orientated or hook-shaped cutting edge. Preceding this cutting edge is a long shallow gullet. This gullet helps feed the willowy materials into the cutting edge for gripping and cutting thereof.

In operation, the larger rigid material will engage and be cammed by the inclined outer guide edge of the appendage and into the cutting edge of the primary cutting tooth. The small willowy materials will project into and slide along the shallow gullet to be hooked by the leading edge of the appendage and severed thereby.

The invention thus provides a circular saw blade having a combination of cutting teeth and blade design features that greatly improves on the cutter blades presently available for brush cutting. More specifically the invention provides a circular saw blade having a combination of blade features to enable the blade to cut the typical range of brush type materials from small willowy stems such as grass to the larger rigid stems such as small trees.

The invention is further described below, by way of example, with reference to the accompanying drawing, wherein:

Fig. 1 is a side view of a cutting blade in accordance with the invention;

Fig. 2 is a sectional view taken on line 2-2 of Fig. 1;

Fig. 3 is a sectional view taken on line 3-3 of Fig. 1;

Fig. 4 is a view taken on line 4-4 of Fig. 1; and

Fig. 5 is an enlarged partial view illustrating the blade of Fig. 1 being operated to cut brush.

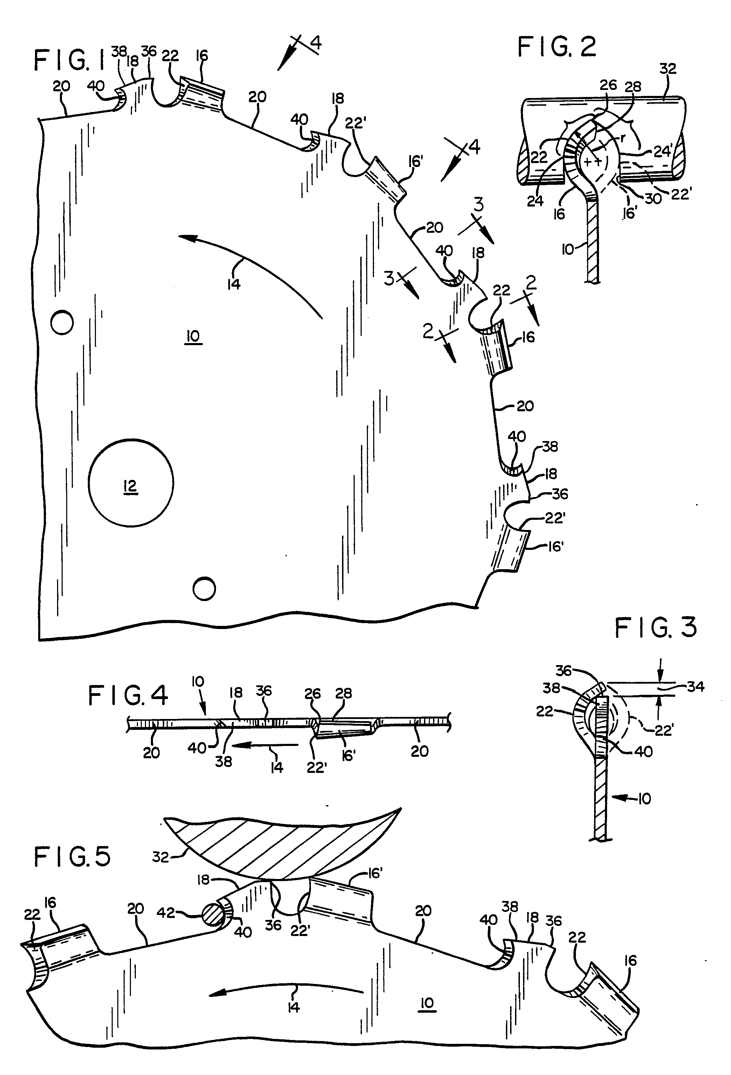

Fig. 1 illustrates a circular saw blade 10 arranged to be mounted on a brush cutting tool, with the tool arbour projected through a mounting hole 12. The blade 10 is rotated by the tool in the direction indicated by arrow 14.

The periphery of the blade is characterized by three features. A primary cutting tooth 16 is preceded by an appendage 18 that is both a depth gauge for the primary tooth and a small stem cutter. Preceding the appendage 18 is an elongate shallow gullet defined by guide edge 20. The sequence of primary cutting teeth, appendage, and leading gullet is repeated about the periphery of the blade body with alternate cutting teeth 16 being right and left hand cutters, respectively.

Figs. 2 and 4 illustrate a primary cutting tooth 16 in front and top views respectively. The tooth 16 is bowed or curved and superimposed in broken lines in Fig. 2 is a preceding or succeeding primary cutting tooth 16′ which is bowed or curved in the opposite direction.

The cutting tooth 16 is sharpened to provide a leading cutting edge 22. It is to be particularly note that the curved cutting edge 22 of the tooth 16 is curved with a radius r to provide a slitting or slicing cutting action and stops short of the apex of the curve, at which point the tooth would become a raker cutting tooth. In the embodiment illustrated, the centre or pivot point for the radius r is established on the plane defined by the opposite side wall of the blade body (opposite to the side of curvature of the tooth).

The "working" portion of the cutting edge 22 is that portion that extends upwardly or radially outwardly from its most laterally offset point 24 around to a point 26 adjacent its tip 28. For purposes of this invention, the tip 28 is considered the termination of this working cutting edge portion and includes that portion of the cutting tooth which overlaps succeeding and preceding oppositely curved cutting teeth 16′. This overlapping tooth tip portion ensures a full width cutting of the combined cutting edges 16,16′ but is retained for that purpose only. It is allowed only to extend the width of the blade body and avoids cutting the kerf area preceding the intermediate curved portion of the cutting tooth, that is, from points 24,24′ to the plane of the blade body.

Fig. 2 illustrates the formation of a kerf 30 through a larger rigid stem 32. As will be noted, the inner kerf wall is formed by the combined cutting edges 22 and 22′, from point 24 of tooth 16 around to point 28 and back to point 24′ of tooth 16′.

Figs. 3 and 4 illustrate the appendage 18 which can also be described as a secondary or small stem cutting tooth. As indicated, the appendage 18 has multiple functions. First it is a depth gauge, as determined by its most outwardly projected point or peak 36, at the rearmost position of the appendage. The appendage 18 thus provides a barrier that prevents the cutting edge 22 from taking too deep a bite. Fig. 3 illustrates a distance 34 that is the difference between the peak 36 and the cutting edges 22 and 22′. The distance 34 is thus the deepest bite that is permitted to the cutting edges 22 and 22′ by the appendage 18 in its function as a depth gauge.

The second function of the appendage 18 is to provide an inclined or angled upper guide edge 38. The guide edge 38 begins at a point above the gullet guide edge 20 by an amount that accommodates the diameter of small willowy stems. Larger stems will simply be engaged and cammed by the guide edge 38 to the peak 36 so as to be cut to the desired depth. In this respect, the appendage 18 functions as what is often referred to in the industry as a bumper.

The third function of the appendage 18 is to provide a generally upright or radial cutting edge 40 along the transitional edge between the guide edge 38 and the gullet guide edge 20. As illustrated in Fig. 1, cutting edge 40 is concavely curved, a shape more commonly referred to as hook shape.

The gullet guide edge 20 defines an elongate reach between the rear end of a preceding cutting tooth 16 and the cutting edge 40 of a succeeding appendage 18. This elongate shallow gullet is about the same length as the combined lengths of the appendage 18, the cutting tooth 16, and the spacing therebetween. Thus, about 50% of the exposed periphery of the blade is occupied by these gullets. The long reach of the gullet enables willowy stems to become projected into the gullet between the cutting tooth 16 and the appendage 18 for cutting the hook-shaped cutting edge 40.

In a specific embodiment, a blade 22.86 cm. (9 inches) in diameter of about 0.18 cm. (0.070 inches) thick steel plate was provided with 12 primary cutting teeth (16,16′) each having a length of about 1.59 to 1.9 cm. (5/8 to 3/4 inches). The teeth were preceded by appendages 18 having a length of about 1.11 cm. (7/16 inches). The appendages were spaced forwardly of the primary cutting teeth in each case by about 0.79 cm. (5/16 inches). The total length of the tooth, appendage and spacing therebetween was about 3.18 cm. (1-1/4 inches). The spacing defined by guide edge 20 forming the shallow gullet was about 2.70 cm. (1-1/16 inches). (It should here be noted that the spacing between the cutting tooth and preceding depth gauge is also commonly referred to as a gullet. The term is not used for this description to avoid confusion as between the two gullet spacings, the term "gullet" being herein reserved for the elongated spacing between the appendage 18 and the preceding primary tooth 16.)

The height of the tooth at the cutting edge when new was about 0.79 cm. (5/16 inches) and the height of the appendage adjacent the cutting tooth when new was about 0.64 cm. (1/4 inches). The depth gauge setting was thus about 0.16 cm.

(1·16 inches). The height of the appendage at the shallow end was about 0.48 cm. (3/16 inches). The height differential as between the beginning and end of the incline was about 0.24 cm. (3/32 inches), the additional 0.08 cm. (1/32 inches) being the result of a difference in the depth of the gullet and the depth of the spacing between the tooth and appendage. The curvatures of the cutting edges 22 and 22′ were such as to have a radius, that is, radius r in Fig. 2, of 0.64 to 0.79 cm. (1/4 to 5/16 inches).

The operation of the saw blade of the invention is illustrated in Fig. 5. The rigid stem 32 is shown in position to be cut by the primary cutting edge 22. As will be noted, the upper rear point or peak 36 of the appendage 18 establishes the depth of cut effected by cutting edge 22.

As shown in Fig. 2, the cutting edges 22 and 22′ form in combination a parabolically curved cutting edge that carves out a substantially parabolically curved kerf through the stem 32. As will be noted, the working portion of the cutting edge 22 is that portion between the outer lateral point 24 and point 26.

The cutting tooth 16, its cutting edge 22, the depth gauge peak 36 and the inclined guide edge 38 are all designed to cut rigid stems. The cutting edge 40 is established with a height and hook-shaped cutting edge configuration especially designed to accommodate small willowy stems such as the illustrated stem 42. As appears from Fig. 5, the stems 42 fall into the shallow gullet spacing and onto guide edge 20 which guides the stems into the hook-shaped cutting edge 40. The hook shape of the cutting edge 40 and its radial or vertical cutting edge draws the stem 42 into the cutting edge to be sliced and severed by it.

It is believed that the curved slitting/non-raking action of the primary tooth is important to the smooth cutting of the blade through the large rigid stem materials of brush. The intermediate curved portion effectively carves out a kerf width and avoids binding of the blade. As the kerf tends to close on the blade, the laterally positioned curved cutting edge cuts the side walls to maintain the desired clearance. The slicing action of the blade edge will not, as in a raker tooth, dig in and pull the blade into an overbiting action, which would also produce binding.

It will be appreciated that the invention may be embodied in a variety of different ways and is not limited to the specific embodiment described above. Whereas the hook-shaped cutting edge, elongate gullet and configured cutting edges of the primary cutter are believed novel in combination, they also independently provide benefits in combination with features of conventional cutting blade configurations.

## Claims

1. A brush cutting blade comprising a circular saw blade body (10) having a periphery defined by a repeating sequence of a primary cutting tooth (16), and an appendage (18) forming a depth gauge peak (36) preceding and spaced from the cutting edge (22) of the primary cutting tooth, one of the primary cutting teeth (16) extended laterally outwardly and then back over the plane of the body (10) to form a curved portion terminating at the body plane, and another of the primary cutting teeth (16) extended laterally outwardly from the opposite side of the body plane and then back over the body plane to form a curved portion terminating at the body plane, the leading edge of each curved portion being shaped into a cutting edge (22) directed outwardly from the outermost lateral point to a point over the blade body (10) for slitter type cutting action, said slitter type cutting action forming a kerf that is wider than the blade body to reduce binding and pinching.

2. A brush cutting blade as claimed in claim 1 wherein the leading edge of the appendage is a cutting edge (40) of predetermined height for severing stem brush materials.

3. A brush cutting blade comprising a circular saw blade body (10) and having a periphery defined by a repeating sequence of a primary cutting tooth (16) having a leading cutting edge (22), and an appendage (18) forming a depth gauge peak (36) preceding and spaced from the cutting edge (22) of the primary cutting tooth (16), the appendage (18) having a leading cutting edge (40) of predetermined height for severing small stem brush materials.

4. A brush cutting blade as claimed in claim 3 wherein the leading edge (22) of the primary cutting tooth (16) extends laterally outwardly and then back over the plane of the body (10) to form a curved portion terminating at the body plane, the curved portion being shaped into an outwardly directed cutting edge from the outermost lateral point (24) to a point (26) over the blade body.

5. A brush cutting blade as claimed in claim 4 wherein alternate primary cutting teeth (16) are shaped to extend laterally outward in opposite directions.

6. A brush cutting blade as claimed in claim 2, 3, 4 or 5 wherein the cutting edge (40) of the appendage (18) is hook shaped.

7. A brush cutting blade as claimed in claim 6 including a gullet formed on the saw blade periphery forward of the appendage for permitting small stem brush materials to engage and be severed by the cutting edge (40).

8. A brush cutting blade as claimed in claim 7 wherein the length of the gullet is substantially the combined length of the appendage (18), the cutting tooth (16) and the spacing therebetween.

9. A brush cutting blade as claimed in claim 7 or 8 wherein the gullet extends between the rear end of a cutting tooth (16) and the cutting edge (40) of the succeeding appendage (18).

10. A brush cutting blade as claimed in any preceding claim wherein the appendage (18) has an upper guide surface (38) extending to a rearwardly positioned peak defining the depth gauge peak (36), the upper guide surface (38) being inclined radially outwardly in the direction from front to back, to cam rigid brush materials to a desired depth of cut for cutting by the primary cutting tooth (16).

FIG. 1

FIG. 2

FIG. 3

FIG. 4

FIG. 5